# EUROPEAN PATENT APPLICATION

(11) **EP 2 930 937 A1**
(43) Date of publication of application: **14.10.2015**
(21) Application number: 13861180.1
(22) Date of filing: 05.09.2013
(51) Int. Cl.: H04N 21/472

(54) **METHOD, APPARATUS, AND SYSTEM FOR TRANSFERRING DIGITAL MEDIA CONTENT PLAYBACK**

(30) Priority: 05.12.2012 CN 201210516264
(71) Applicant: ZTE Corporation, Shenzhen, Guangdong 518057 (CN)
(72) Inventor: LIU, Haijun, Shenzhen Guangdong 518057 (CN)
(74) Representative: Tischner, Oliver
(86) International application number: PCT/CN2013/083012
(87) International publication number: WO 2014/086175

(57) **Abstract**

The present disclosure discloses a method, apparatus and system for transferring digital media content playback, and relates to the field of communication and information. The method includes that: first equipment detects a body movement of a user for transferring out the digital media content playback, and sends a first message for notifying second equipment to get ready to transfer the digital media content playback to the second equipment to the second equipment; and a second message responsive to the first message is received from the second equipment, and the digital media content playback is transferred to the second equipment for the second equipment to play according to the second message. By the present disclosure, the user can experience a digital media content more conveniently and control the digital media content more naturally and easily, the purpose of controlling the transferring of the digital media content playback by the user can be accurately achieved, and the user may further transfer different kinds of digital media contents such as videos and audios on one piece of equipment to different equipment to play, so that the effect of improving the entertainment life of the user is achieved.

## Description

### TECHNICAL FIELD

The present disclosure relates to the field of communication and information, and in particular to a method, transferring-in apparatus, transferring-out apparatus and related system for transferring digital media content playback between digital media equipment.

### BACKGROUND

The development of digital media and networks enriches entertainment experiences in people's daily lives. An existing technology enables people to watch high-definition Televisions (TV) of which sources may be digital compact discs, cable TVs, the Internet and the like at home, experience stereo, 5.1-channel, 7.1-channel and even more realistic sound effects and enjoy these experiences by virtue of flat-panel TVs and mobile phones. By the existing technology, people may also transfer digital contents to play between different equipment through networks and play the digital contents, for example, controlling the switching of programs of previous channels and next channels, through remote controllers and gesture control equipment.

At present, a common method for controlling multiple equipment is to use respective remote controllers of the equipment for control, but the remote controllers are often not universal. Most of remote controllers do not have a network function, for example, an existing TV and audio equipment; but there are also some remote controllers supporting networks, for example, software supporting an interworking protocol is loaded on equipment (such as a mobile phone and a TV) with calculation and network capabilities to control another equipment. Gesture control is a relatively novel manner at present: a camera on equipment monitors a gesture, performs analysis and identification, and finally converts the gesture into control over the equipment.

Along with the development of technology, requirements on content playing sharing and transferring among multiple equipment grow, and the abovementioned control manners are not so convenient, in which people need to select remote controllers corresponding to the equipment from a heap of remote controllers and continuously replace the remote controllers for controlling different equipment, or only people familiar with basic computer operation can control the equipment by operating TVs and mobile phones, or a single piece of equipment is controlled by a simple gesture. People expect to control the playback sharing and playback transferring of contents by virtue of simpler and more natural control manners.

If a simpler and more natural control manner can be provided to realize control over functions of playing transferring, cooperative playing and the like of contents between equipment and an accurate result can be obtained by such a control manner, entertainment lives of people may be easier and more enjoyable; and in addition, people also want to understand and realize new equipment functions more easily when mastering the new equipment functions.

### SUMMARY

The embodiments of the present disclosure provide a method, apparatus and system for transferring digital media content playback, so as to better solve the problem of how to accurately control the transferring of the digital media content playback by virtue of a gesture.

According to one aspect of the embodiments of the present disclosure, a method for transferring digital media content playback is provided, including that:
first equipment detects a body movement of a user for transferring out digital media content playback, and sends the second equipment a first message for notifying second equipment to get ready to transfer the digital media content playback to the second equipment; and
the first equipment receives from the second equipment a second message responsive to the first message, and transfers the digital media content playback to the second equipment to play according to the second message.

Preferably, the first equipment, after detecting the body movement of the user for transferring out the digital media content playback, may obtain first positional relationship information between the first equipment and the user, encapsulate the first positional relationship information into the first message, and send the first message to the second equipment for the second equipment to determine one of the first equipment for receiving the second message according to the first positional relationship information in the first message.

Preferably, the first equipment receives one or more second messages from one or more second equipment, may extract one or more pieces of second positional relationship information from the one or more second messages, and determine one of the one or more second equipment to which the digital media content playback is to be transferred according to the one or more pieces of second positional relationship information.

Preferably, the first/second positional relationship information may be angle information formed by an arm, a hand and the first/second equipment, or the first/second positional relationship information may be distance information between a hand or an arm and the first/second equipment.

Preferably, the first equipment may detect the body movement by virtue of a photographic part of the first equipment, and the body movement may be a gesture including grabbing/pinching and taking-back.

According to another aspect of the embodiments of the present disclosure, a method for transferring digital media content playback is provided, including that:
second equipment detects a body movement of a user for transferring digital media content playback to the second equipment, and sends a second message for showing a digital media content playing capability of the second equipment to first equipment; and
the second equipment receives from the first equipment a third message responsive to the second message, and transfers the digital media content playback of the first equipment to the second equipment to play according to the third message.

Preferably, before the second equipment detects the body movement, the method may further include that:
the first equipment detects a body movement of the user for transferring out the digital media content playback to obtain first positional relationship information between the first equipment and the user, encapsulates the first positional relationship information into a first message for notifying the second equipment to get ready to transfer the digital media content playback to the second equipment, and sends the first message to the second equipment; and
the second equipment, after receiving one or more first messages from one or more first equipment, may determine one of the one or more first equipment for receiving the second message according to one or more pieces of first positional relationship information in the one or more first messages.

Preferably, the second equipment, after detecting the body movement of the user for transferring the digital media content playback to the second equipment, may obtain second positional relationship information between the second equipment and the user, encapsulate the second positional relationship information into the second message, and sends the second message to the first equipment.

Preferably, the first equipment, after receiving the second message from one or more second equipment, may determine one of the one or more second equipment for transferring the digital media content playback according to the second positional relationship information in the second message, and sends the third message to the determined second equipment.

Preferably, the second equipment, after receiving the third message, may transfer the digital media content playback to the second equipment to play when the third message is a message indicative of transferring the digital media content playback.

Preferably, the first/second positional relationship information may be angle information formed by an arm, a hand and the first/second equipment, or the first/second positional relationship information may be distance information between a hand or an arm and the first/second equipment.

Preferably, the first equipment may detect the body movement by virtue of a photographic part of the first equipment, and the body movement may be a gesture including grabbing/pinching and taking-back; and the second equipment may detect the body movement by virtue of a photographic part of the second equipment, and the body movement may be a gesture including throwing/pointing/finger spreading.

According to another aspect of the embodiment of the present disclosure, a transferring-out apparatus for transferring digital media content playback is provided, including:
a first detection module, configured to detect a body movement of a user for transferring out digital media content playback;
a first transceiver module, configured to send the second equipment a first message for notifying second equipment to get ready to transfer the digital media content playback to the second equipment, and receive from the second equipment a second message responsive to the first message; and
a transferring-out module, configured to transfer the digital media content playback to the second equipment to play according to the second message.

Preferably, the transferring-out module may include:
a transferring-out extraction sub-module, configured to receive one or more second messages from one or more second equipment, and extract one or more pieces of second positional relationship information from the one or more second messages; and
a transferring-out selection sub-module, configured to determine one of the one or more second equipment to which the digital media content playback is to be transferred according to the one or more pieces of second positional relationship information.

According to another aspect of the embodiment of the present disclosure, a transferring-in apparatus for transferring digital media content playback is provided, including:
a second detection module, configured to detect a body movement of a user for transferring digital media content playback to the second equipment;
a second transceiver module, configured to send a second message for showing a digital media content playing capability of the second equipment to first equipment, and receive a third message responsive to the second message from the first equipment; and
a transferring-in module, configured to transfer the digital media content playback of the first equipment to the second equipment to play according to the third message.

Preferably, the second transceiver module may be further configured to receive from the first equipment one or more first messages including one or more pieces of first positional relationship information between the first equipment and the user, and determine one of the first equipment for receiving the second message according to the one or more pieces of first positional relationship information in the one or more first messages.

According to another aspect of the embodiment of the present disclosure, a system for transferring digital media content playback is provided, including the abovementioned transferring-out apparatus and transferring-in apparatus.

Compared with the existing technology, the present disclosure has the beneficial effects that:
the embodiments of the present disclosure enable the user to experience a digital media content more conveniently and control the digital media content more naturally and easily, thereby not only controlling the transferring of the digital media content playback by the user accurately, but also enabling the user to transfer different kinds of digital media contents such as videos and audios from one equipment to different equipment to play, thus further improving the entertainment life of the user.

### BRIEF DESCRIPTION OF THE DRAWINGS

Fig. 1 is a principle diagram of a method for transferring digital media content playback according to a first embodiment of the present disclosure;
Fig. 2 is a schematic diagram of an application scenario of transferring digital media content playback according to a first embodiment of the present disclosure;
Fig. 3 is a schematic diagram of an angle between a gesture and a camera according to an embodiment of the present disclosure;
Fig. 4 is a schematic diagram illustrating a flowchart of network messages in a control method according to a first embodiment of the present disclosure;
Fig. 5 is a principle diagram of a method for transferring digital media content playback according to a second embodiment of the present disclosure;
Fig. 6 is a diagram of an application scenario of transferring digital media content playback according to a second embodiment of the present disclosure;
Fig. 7 is a schematic diagram illustrating flowchart of network messages in a control method according to a second embodiment of the present disclosure;
Fig. 8 is a principle diagram of a method for transferring digital media content playback according to a third embodiment of the present disclosure;
Fig. 9 is a schematic diagram of an application scenario of transferring digital media content playback according to a third embodiment of the present disclosure; and
Fig. 10 is a schematic diagram illustrating a flowchart of network messages in a control method according to a third embodiment of the present disclosure.

### DETAILED DESCRIPTION

The preferred embodiments of the present disclosure are described below with reference to the drawings in detail, and it should be understood that the preferred embodiments of the present disclosure are only adopted to describe and explain the present disclosure and not intended to limit the present disclosure.

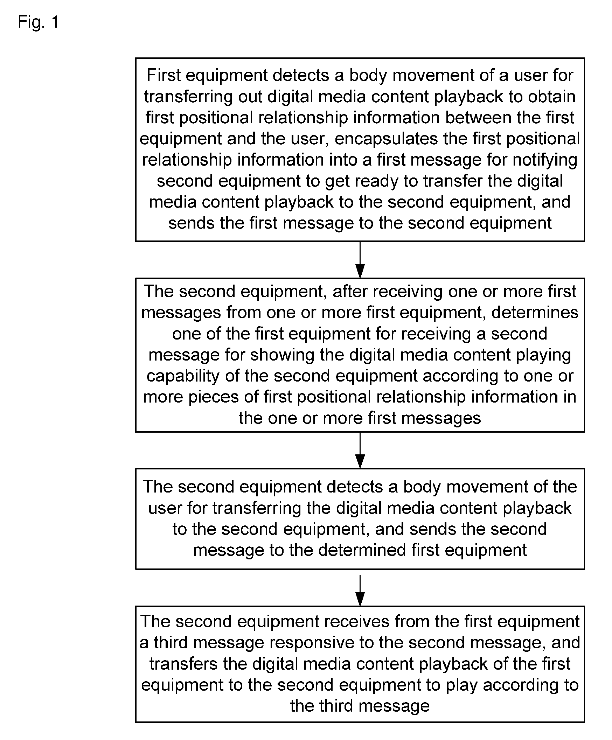

Fig. 1 is a principle diagram of a method for transferring digital media content playback according to a first embodiment of the present disclosure, and as shown in Fig. 1, the method includes the following steps:
step 101: first equipment detects a body movement of a user for transferring out digital media content playback to obtain first positional relationship information between the first equipment and the user, encapsulates the first positional relationship information into a first message for notifying second equipment to get ready to transfer the digital media content playback to the second equipment, and sends the first message to the second equipment;
step 102: the second equipment, after receiving one or more first messages from one or more first equipment, determines one of the one or more first equipment for receiving from the second equipment a second message for showing a digital media content playing capability of the second equipment according to one or more pieces of first positional relationship information in the one or more first messages;
step 103: the second equipment detects a body movement of the user for transferring the digital media content playback to the second equipment, and sends the second message to the determined first equipment;
step 103 is specifically implemented as follows: the second equipment, after detecting the body movement of the user for transferring the digital media content playback to the second equipment, obtains second positional relationship information between the second equipment and the user, encapsulates the second positional relationship information into the second message, and sends the second message to the first equipment., so that the first equipment, after receiving the second message from one or more second equipment, may determine one of the one or more second equipment for transferring the digital media content playback according to the second positional relationship information in the second message, and sends a third message to the determined second equipment; and
step 104: the second equipment receives a third message responsive to the second message from the first equipment, and transfers the digital media content playback of the first equipment to the second equipment to play according to the third message.
step 104 is specifically implemented as follows: the second equipment, after receiving the third message, transfers the digital media content playback of the first equipment to the second equipment to play when the third message is a message indicative of transferring the digital media content playback.

Preferably, the first/second positional relationship information is angle information formed by an arm, a hand and the first/second equipment, or the first/second positional relationship information is distance information between a hand or an arm and the first/second equipment.

Preferably, the first equipment detects the body movement by virtue of its photographic part, and the body movement is a gesture including grabbing/pinching and taking-back; and the second equipment detects the body movement by virtue of its photographic part, and the body movement is a gesture including throwing/pointing/finger spreading.

That is, the first equipment in the embodiment of the present disclosure has a triggering capability in transferring of digital media content playback, and the triggering capability means that the first equipment can receive or identify the body movement of preparing to transfer the playback, including grabbing or swiping of fingers on a touch screen, grabbing at a camera and the like. The first equipment further has a network capability which enables mutual discovery and connection with other equipment, and can broadcast a message to the other equipment after the body movement of preparing to transfer the playback is received. The first equipment further has a capability of determining opposite equipment according to the second message. The second equipment in the embodiment of the present disclosure has a network capability and an identification capability, wherein the network capability enables mutual discovery and connection with other equipment, and enables reception of a broadcast message from the other equipment. The second equipment further has the identification capability, wherein the identification capability means that the second equipment can identify that digital media content playback is to be transferred to the second equipment, and the identification capability combines with a context application scenario including identifying movements such as the throwing movement of the hand, the pointing movement of the hand or the spreading movement of the hand on the touch screen. The second equipment further has a capability of determining opposite equipment according to the first message.

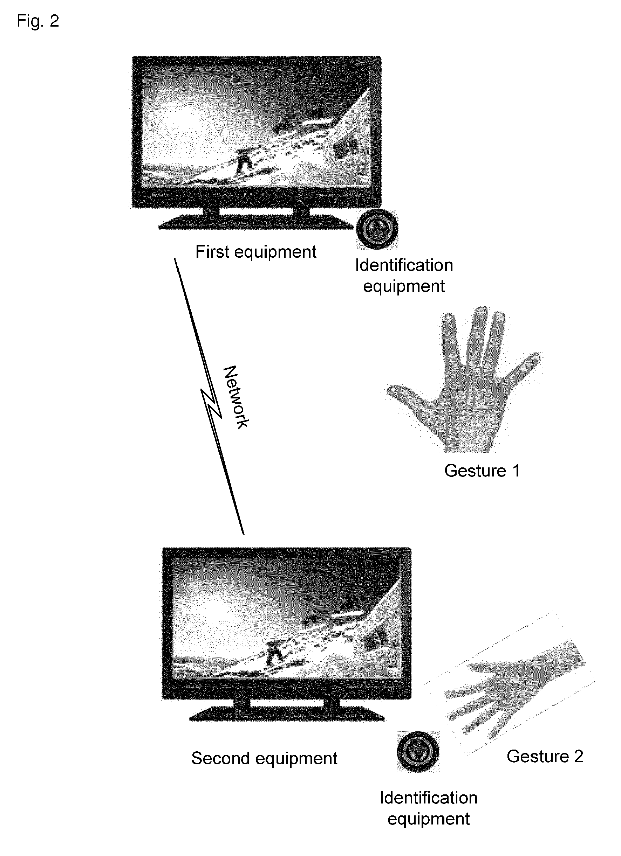

Fig. 2 is a schematic diagram of an application scenario of transferring digital media content playback according to a first embodiment of the present disclosure, each equipment and their relationships are shown in Fig. 2, a system includes two equipment which are both TVs: TV1 and TV2, and in the embodiment, the condition that gestures are sequentially sent to TV1 and TV2 is taken as an example for detailed description.

TV1, as first equipment, is playing a digital media content, the digital media content may be a locally stored video file, or a video stream from an Internet Protocol (IP) network, or a local audio file, or an audio stream from the IP network, and TV1 may also be displaying a desktop of an operation system and the like as a displayer of a computer host.

There is a photographic part (such as a camera) on TV1, and a user may make a grabbing movement and the like with a hand in front of the camera. TV1 may identify the movement captured by the camera and know that the user is making the grabbing movement and the like.

TV1 has a triggering capability of transferring digital media content playback, and the triggering capability means that TV1 may acquire a movement image through the camera, thereby identifying and determining an instruction of preparing to transfer the digital media content playback according to a predefinition.

TV1 is provided with a network interface which supports Institute of Electrical and Electronic Engineers (IEEE) 802.11 b/g/n or IEEE 802.3, so that TV1 can be connected to the IP network.

A module in TV1 further has a network service capability, and upon the network service capability, mutual discovery and connection with other equipment can be realized, and a message can be broadcast to the other equipment after the instruction of preparing to transfer the playback is received.

TV2, as second equipment, also has a photographic part (such as a camera). As in the case with TV1, a user may also make a throwing, releasing or pointing movement and the like in front of the camera of TV2.

TV2 also has a capability of identifying the transferring of the digital media content playback, that is, TV2 can acquire a movement image through the camera so as to identify that certain digital media content playback is to be transferred to TV2 to play according to a predefinition, namely learns about that the digital media content playback is to be transferred to TV2, and such an identification capability combines with a context application scenario, including identifying movements such as the throwing movement of a hand, the releasing movement of the hand, the pointing movement of the hand or the spreading movement of the hand on a touch screen (it is supposed that TV2 is provided with the touch screen).

TV2 is provided with a network interface to support IEEE 802.11 b/g/n or IEEE802.3, so that TV2 can be connected to an IP network.

A module in TV2 also has a network service capability which enables mutual discovery and connection with other equipment, enables reception of and response to the broadcast message of TV1, and enables transmission of a confirmation message to TV1 after the transfer movement made by the user is identified, so as to finally perform digital media content playback transferring with TV1.

In terms of a function module, the system includes a transferring-out apparatus, and the first equipment TV1 is the transferring-out apparatus, including:
a first detection module, configured to detect a body movement of a user for transferring out digital media content playback;
a first transceiver module, configured to send the second equipment a first message for notifying the second equipment to get ready to transfer the digital media content playback to the second equipment, and receive from the second equipment a second message responsive to the first message; and
a transferring-out module, configured to transfer the digital media content playback to the second equipment to play according to the second message.

Preferably, the transferring-out module includes:
a transferring-out extraction sub-module, configured to receive one or more second messages from one or more second equipment, and extract one or more pieces of second positional relationship information from the one or more second messages; and
a transferring-out selection sub-module, configured to determine one of the one or more second equipment for transferring the digital media content playback according to the one or more pieces of second positional relationship information.

In terms of a function module, the system further includes a transferring-in apparatus, and the second equipment TV2 is the transferring-in apparatus of the system, including:
a second detection module, configured to detect a body movement of the user for transferring the digital media content playback to the second equipment;
a second transceiver module, configured to send a second message for showing a digital media content playing capability of the second equipment to the first equipment, and receive from the first equipment a third message responsive to the second message; and
a transferring-in module, configured to transfer the digital media content playback of the first equipment to the second equipment to play according to the third message.

Preferably, the second transceiver module is further configured to receive from one or more first equipment one or more first messages including one or more pieces of first positional relationship information between the first equipment and the user, and determine one of the one or more first equipment for receiving the second message according to the one or more pieces of first positional relationship information in the one or more first messages.

Each of the first detection module and the second detection module has a movement input function sub-module, for example, a touch screen and a camera, and also has an identification function sub-module. The movement input function sub-modules send the acquired movements to the identification function sub-modules, and then the identification function sub-modules identify meanings of the movements, for example, identifying that the digital media content playback is to be transferred and the digital media content playback is to be transferred to a local equipment.

Each of the first transceiver module and the second transceiver module has a network service function sub-module and a network interface, the abovementioned identification function sub-modules are connected with the network service function sub-modules, and send the identified movements to the network service function sub-modules, then the network service function sub-modules structure the identified movements to form network messages, and command the network interfaces to send the network messages, and the network service function sub-modules can receive the network messages. The network interfaces are responsible for sending and receiving at various networks the network messages.

In the embodiment, the movements which can be identified by TV1 are as follows respectively:
first group:
   1) grabbing: the user makes a grabbing movement or a pinching movement with a hand at the camera; and
   2) taking-back: the user makes a taking-back movement with a palm and an arm at the camera: the arm is straightened at the camera, and then the forearm is bent back towards a midline direction of a body of the user.

In the embodiment, the movements which can be identified by TV2 are as follows respectively:
second group:
   1) throwing: the user makes a throwing movement with a hand at the camera of TV2;
   2) releasing: the user keeps a grabbing or pinching gesture in the first group, and then makes a releasing movement with a hand at the camera of TV2;
   3) pointing: the user makes a pointing movement at the camera of TV2; and
   4) spreading; if TV2 has a touch screen, five fingers are gathered, and then the fingers are spread on the touch screen.

In terms of identification of meanings of the movements with a camera, a histogram method or a hidden Markov model method is adopted for the identification of the gestures. At first, a gesture of the user needs to fall within a capturing range of the camera, so that the camera can generate a gesture video, and send the gesture video to the identification function sub-module; then the identification function sub-module identifies positions of the hand in gesture images in the video by virtue of colours, or contours, or structured light analysis or the like, detects and divides gesture objects, extracts gesture characteristics, and tracks the gesture; and then finger direction and movement direction sequences are processed to finally identify the gesture completely, and the meanings of the movements of the user may be determined by adopting methods of comparison with a predefined gesture space and the like.

Besides the abovementioned gestures, movements such as an eyeball movement and a body gesture may further be made.

Digital media content transfer control can be respectively finished by selecting one movement from each of the two groups of movements for combination, for example, the movement 1) in the first group is selected to be made on TV1 at first, and then the movement 2) in the second group is made at the camera of TV2.

The network service capabilities of TV1 and TV2 include:
1) mutual discovery of TV1 and TV2 through a network;
2) cooperative control operation through the network; and
3) transmission of a digital media content.

TV1 sends the first message for notifying TV2 to get ready to receive or identify the body movement (such as a gesture) after receiving or identifying the body movement of preparing to transfer the digital media content playback, the message including first positional relationship information (such as gesture position information) between TV1 and the user. Then, TV2 sends the second message to notify TV1 that TV2 has been ready to receive the digital media content playback after receiving or identifying the body movement of transferring the digital media content playback to TV2, the second message including second positional relationship information (such as gesture position information) between TV2 and the user. Finally, TV1 confirms the transfer of the digital media content playback to TV2 to finish the transfer of the playback.

The gesture position information may be an angle parameter of the gesture and the equipment, or may also be a distance parameter between the gesture and the equipment. Therefore, when there exist multiple first equipment and/or multiple second equipment, local equipment can determine optimal opposite equipment according to the gesture position information of the opposite equipment and respond to the message.

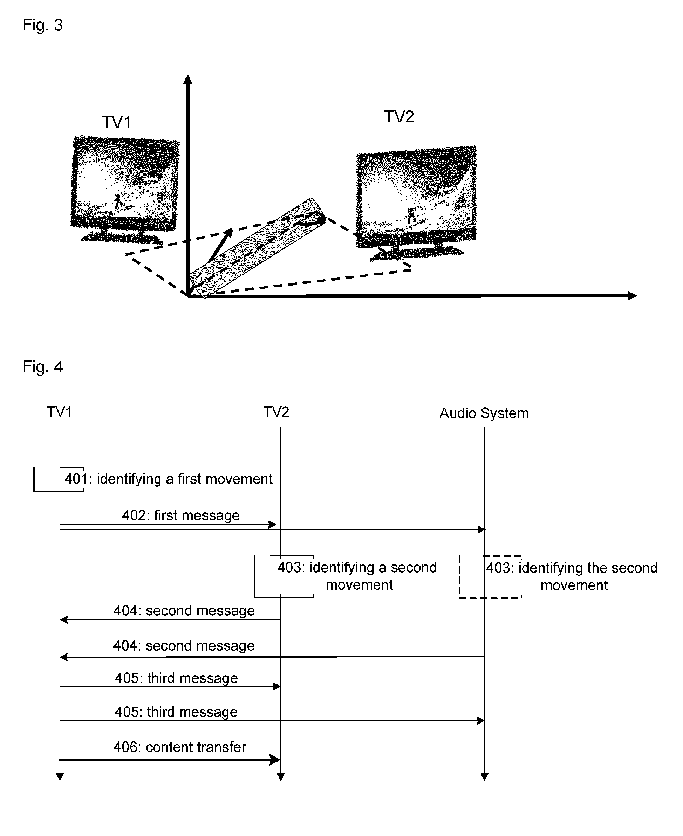

Fig. 3 is a schematic diagram of an angle between a gesture and a camera according to an embodiment of the present disclosure. In consideration that there may be more than one first equipment or second equipment in a scenario of the present disclosure, as shown in Fig. 3, an operating user is not required to accurately regulate own position and make the gesture in front of each equipment. The condition that there are two second equipment in the system is taken as an example, as shown in Fig. 3, there are two equipment TV1 and TV2, and the equipment forms an angle with a gesture of the user by taking the user as a coordinate centre. In the embodiment, when the equipment identifies the gesture, the angle and distance between an extending line of the gesture of the user and the camera can be identified, which can be implemented by virtue of technologies of measurement with additional infrared light, laser measurement, measurement and the like in the existing technology.

In Fig. 3, any equipment with an identification function identifies an arm at first, the other endpoint of the arm is taken as a coordinate origin, an angle is changed from 0° to 360° if a palm (fingers) moves (move) from left to right (observed by the user), and the angle is changed from 0° to 180° if the palm (fingers) moves (move) from top to bottom. Here, it is the included angle between a camera-hand line and a hand-arm line in a triangle formed by the camera, the hand and the other endpoint of the arm, which is to be calculated by the equipment. If the included angle is larger, it is indicated that the gesture more tends to point to the camera in the triangle, that is, the gesture more tends to point to the equipment where the camera is. The magnitude of the angle and the corresponding meaning are as follows:
<0° : a hand does not point to the equipment;
0° -90° : a hand maybe points to the equipment;
90° -180° : in such a situation, the hand, the arm and the camera more and more tend to be located in the same straight line, which means that the hand probably point to the equipment; and
180° : in such a situation, the hand, the arm and the camera are located in the same straight line, and the hand undoubtedly points to the equipment.

As another embodiment, in Fig. 3, the coordinate origin is still specified as above, and here, another point may also be selected as the coordinate origin. It is specified that the angle is changed from 0° to 360° if the palm (fingers) moves (move) from left to right (observed by the user) and the angle is changed from 0° to 180° if the palm (fingers) moves (move) from top to bottom, and the direction here may also be selected. It is the lengths of the camera-hand line, the hand-arm line and the line formed by the other endpoint of the arm and the camera in the triangle formed by the camera, the hand and the other endpoint of the arm, which are to be calculated by the equipment; and in terms of length calculation, the identification sub-module can directly measure the three lengths, and can also proportionally calculate the lengths after measuring reference distances.

Optionally, the positional relationship information may further include the distance between the hand or arm and the camera.

Fig. 4 is a flowchart of network messages in a control method according to a first embodiment of the present disclosure, and as shown in Fig. 4, the flow includes the following steps.

In Fig. 4, first equipment is TV1, and there are two second equipment which are TV2 and an Audio System respectively. In the embodiment, a digital media content is played on TV1, a user controls the display media content playback to be transferred from TV1 to TV2, and for the user, scenarios and experiences are as follows: when grabbing and taking-back movements are made on a screen of TV1 on which a video is played and then the hand makes a throwing movement towards a camera of TV2, the digital media content originally played on TV1 is played on TV2, and the user can directly watch the video content played on TV2. In such a process, the user is not required to identify a menu on the screen, the user is also not required to click a screen button and the like, and the user is further not required to use a remote controller. During the operation of the user with a gesture, the user is not required to operate directly at the camera of TV2, and the user is only required to make the gesture approximately at TV2, so that worry about a conflict happening during the transfer of the digital media content playback of multiple equipment (for example, there is further Audio System) with an identification function is eliminated.

In each embodiment, the equipment is connected with one another through a network, can communicate with one another, and can also have a mutual discovery capability.

Specifically, a processing flow of such a function includes the following steps.

Step 401 is that a user demonstrates a first movement on TV1, and TV1 identifies the movement, and determines a transfer intention of the user, namely identifies that current video playback on TV1 is to be transferred to another equipment to play.

Here, the first movement may be any movement in the first group of movements. TV1 may support at least one movement in the first group of movements. The identification of the movements is predefined in combination with the context in TV1, and a part of movements are identified in combination with an image identification algorithm, so that TV1 can identify the meaning of the movement, namely the current video playback is to be transferred to another equipment to play.

The step depends on a triggering capability in digital media content playback transfer of TV1, i.e. the first equipment, and the triggering capability means that TV1 can receive or identify the body movement of preparing to transfer the playback, and trigger the other equipment to obtain an instruction of preparing to transfer the digital media content playback.

In Step 401, the camera of the first equipment can keep monitoring and identifying all the time (because the first equipment might receive a content from another equipment), or may also start a monitoring function of the camera by virtue of a starting gesture or another starting manner. In Step 401, the first equipment finishes receiving the instruction of preparing to transfer the digital media content playback, or, the first equipment finishes identifying the instruction (such as the grabbing movement) of preparing to transfer the digital media content playback.

Step 402 includes that TV1 broadcasts a first message READY PLEASE after identifying the body movement of the user for transferring out the digital media content playback.

TV1 identifies the movement, starts a network service function after identifying the intention of transferring the digital media content playback, and sends a broadcast/multicast message at a predetermined address and port, the message including information for notifying the other equipment to get ready to identify and receive the movement. The message is called READY PLEASE in the present disclosure, and is configured to notify the other equipment to get ready for identification and reception, and notify a digital media content playing capability of TV1. The first message includes information as follows:
the name, address and port of the TV1, which are the sending address of the message READY PLEASE for the digital media content playback as well as an address for subsequently receiving a preparation response message;
an identified gesture positional relationship, which includes data about the positional relationship between the camera and the gesture such as the angle and the distance of the gesture relative to the camera; an identification method, representation method and the like may adopt the methods shown in Fig. 3, which may further adopt other data for representing the positional relationship;
indication of the type of the digital media content, which indicates that the digital media content may be one of following: an image, a movement image, a sound a desktop or any combinations thereof;
an attribute of the digital media content, which includes an image coding manner when the digital media content is an image, includes an image coding manner, a frame rate and the like when the digital media content is a movement image, includes a sound coding manner, and/or a sampling rate and the like when the digital media content is a sound, includes the size of the desktop, a resolution and the like when the digital media content is a desktop, and includes a corresponding parameter of each type in the combination when the digital media content is a combination;
transport protocol parameters for the sending of the digital media content, which include the address, the port and a set of other protocol parameters, wherein the parameters listed here are used for sending the digital media content when the transfer of the digital media content is finally confirmed; and
a timeout duration, which represents the valid time of the message READY PLEASE, that is, the transfer intention is invalid (cancelled) after a specified time.

Before Step 402 is finished, the TV2 and Audio System can finish mutual connection between TV1 and each of TV2 and Audio System by virtue of their network capabilities, and after TV 1 receives the instruction indicative of having triggered the preparation for transferring the digital media content playback, T1 can also by virtue of a network capability, send a message instruction to notify the other equipment (including TV2 and Audio System) to get ready to receive or identify the gesture through the network, that is, the other equipment is required to confirm whether the transfer of the digital media content playback can be received or not.

In brief, in Step 402, the first equipment TV1 sends the instruction to notify the other equipment to confirm whether the transfer of the digital media content playback can be received or not.

Step 403 includes that the second equipment TV2 and Audio System identify a second movement.

The second movement may be any movement in the second group of movements, and TV2 and Audio System may support at least one movement in the second group of movements. The identification of the movements is predefined in combination with the context in TV2 and Audio System, and in the context, the camera starts enabling the identification function after the first message of TV1 is received, and the identification of the movement is implemented in combination with the image identification algorithm, so that TV2 and Audio System can identify the meaning of the movement, namely the current video playback is to be transferred to the local equipment to play.

It should be noted that there exist multiple second equipment in the embodiment, that is, there may be multiple TV equipment and/or set-top box equipment and/or sound equipment and the like with the abovementioned function, two equipment TV2 and Audio System are adopted, and both TV2 and Audio System can identify the second movement.

In Step 403, the second equipment identifies that the digital media content playback is to be transferred to the second equipment to play.

Step 404 includes that after the second equipment TV2 and Audio System identify the body movement of the user for transferring the digital media content playback, TV2 and Audio System send second messages: PIARED OK or PAIR FAILURED.

In Step 404, there are two kinds of second messages: the first is PAIRED OK, representing that the equipment can receive the digital media content playback; and the other is PAIR FAILED, representing that the equipment cannot receive the transferred digital media content playback although identifying the movement. In the embodiment, TV2 and Audio System send PAIRED OK to TV1.

After TV2 and Audio System identify the movement directed to the two equipment, namely identifying the intention of transferring the digital media content playback to the two equipment; if the two equipment can receive the digital media content playback indicated in the first message sent by TV1, the network service function is enabled, and the second message PAIRED OK is sent to TV1 at the pre-specified address and port, the second message including information for answering TV1: the local equipment is confirmed to receive the digital media content playback. If the two equipment cannot receive the digital media content playback indicated in the first message sent by TV1, the network service function is enabled, and the second message PAIR FAILURE is sent to TV1 at the pre-specified address and port, the message including information for answering TV1: the two equipment cannot receive the digital media content playback for what reason. Of course, TV2 and Audio System may also not respond to the message of TV1, namely not sending any message.

TV2 and Audio System can send the second messages to only one TV1. That is, TV2 and Audio System can receive first messages sent by multiple first equipment like TV1, then TV2 and Audio System determine and select the most accurate first equipment according to gesture position information given by the first equipment in the received first messages, and respond to the selected first equipment with the second message PAIRED OK.

The step that TV2 and Audio System make a determination according to the gesture position information given by multiple first equipment can be processed according to the embodiment shown in Fig. 3, for example, angle data given by a plurality of TVs1 is as follows:
TV1 (1): 100°
TV1 (2): 170°
TV1 (3): 80°

At this time, TV2 and Audio System select TV1 (2) as target equipment, and send preparation response messages.

If it is a distance parameter rather than an angle parameter given by TV1, TV2 and Audio System perform calculation according to a trigonometric formula, and select TV1 after calculating the angle.

Preferably, the second message PAIRED OK includes the digital media content playing capability of the second equipment, including, for example, information as follows:
the name, address and port of the local equipment, which are the sending address of the message PAIRED OK as well as an address for subsequent response interaction;
an identified gesture positional relationship: which includes data about the positional relationship between the gesture and the camera such as the angle and the distance of the gesture relative to the camera, wherein an identification method, representation method and the like may adopt the methods shown in Fig. 3, which may further adopt other data for representing the positional relationship;
indication of a type of the receivable digital media content: which indicates that the digital media content may be one of following: an image, a movement image, a sound a desktop or any combinations thereof, which is the type of the content confirmed by TV2 and Audio System to TV1;
an attribute of the digital media content: which includes an image coding manner when the digital media content is an image, includes an image coding manner, a frame rate and the like when the digital media content is a movement image, includes a sound coding manner, and/or a sampling rate and the like when the digital media content is a sound, and includes the size of the desktop, a resolution and the like when the digital media content is a desktop, which is the attribute of the content confirmed by TV2 to TV1;
a transport protocol for receiving the sent digital media content: which includes the address, the port and a set of other protocol parameters; the parameters listed here are used for reception if the transfer of the digital media content is finally established; it is confirmation of the transport protocol for the content by TV2 and Audio System to TV1; and
a timeout duration: which represents the valid time of the message, that is, the intension of receiving the digital media content playback is invalid (cancelled) after a specified time.

In Step 404, the second equipment confirms that the second equipment have been ready to receive the digital media content playback to the first equipment.

Step 405 includes that TV1 gives a response to the message PAIRED OK: PAIRED CONFIRM or PAIR REFUSED.

TV1 sends a third message PAIRED CONFIRM or PAIR REFUSED to TV2 or Audio System, PAIRED CONFIRM being sent by TV1 to TV2 or Audio System to which TV1 is willing to send the digital media content playback, or PAIR REFUSED being sent by TV1 to TV2 or Audio System to which TV1 may not transfer the digital media content playback. In the embodiment, TV1 sends PAIRED CONFIRM to TV2, and sends PAIR REFUSED to Audio System, namely TV1 selects to transfer the digital media content to TV2 to play.

TV1 receives PAIRED OK from multiple second equipment such as TV2 and Audio System in Fig. 4, and determines the optimal second equipment according to the gesture position information identified by the second equipment. For example, according to the embodiment shown in Fig. 3, TV1 selects TV2 or Audio System according to the straight line with the largest angle and/or minimum distance reported in the received preparation completion message, and gives a response to the selected TV2 or Audio System with PAIR CONFIRM.

For example, if angle data given by TV2 and Audio System is as follows:
TV2(1): 100°
TV2(2): 170°
Audio System: 80°

TV1 selects TV2(2) as target equipment, and gives a response with a message.

If it is a distance parameter rather than an angle parameter given by TV2 or Audio System, TV1 may perform calculation according to the trigonometric formula, and select the target equipment after calculating the angle.

Of course, TV1 may also provide an operating interface for the user to select the target equipment, for example, options are listed on the screen, the user selects the equipment, and then the subsequent flow is continued.

Step 406 includes that the current digital media content playback of TV1 is transferred to TV2 to play.

After the confirmation between TV1 and TV2 through the network messages is made, the transfer of digital media content playback between TV1 and TV2 is started until being completed or interrupted.

The media transport protocol for message negotiation between TV1 and TV2 is adopted for transferring the digital media content playback, for example, Real Time Transport Protocol/Real Time Transport Control Protocol (RTP/RTCP), Hyper Text Transport Protocol (HTTP) type Adaptive Streaming (HAS), File Transport Protocol (FTP), a Wireless Fidelity (WiFi) display technology, a Wireless Home Digital Interface (WHDI), Wireless High Definition (WiHD) protocol and the like may be adopted.

In a transfer process, information such as coding and decoding parameters, a time shift parameter of the played content and the like may be transmitted between TV1 and TV2.

When the playing or transmission of the digital media content on TV1 is completed, TV1 can send a message to TV2 to notify TV2 that playing is completed, and removes the network connection.

In the first embodiment, TV1, as the first equipment, identifies the gesture directed to TV1 and sends a multicast request message (the first message) for playback transfer, and then TV2, as the second equipment, identifies the gesture directed to TV2 itself, and sends the second message to TV1. Furthermore, the gesture may be only directed to the first equipment TV1, and TV1 sends the first message to trigger playback transfer negotiation after identifying the gesture directed to TV1 itself.

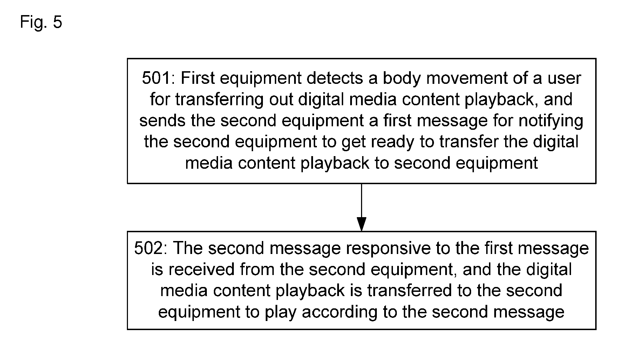

Fig. 5 is a principle diagram of a method for transferring digital media content playback according to a second embodiment of the present disclosure, and as shown in Fig. 5, the method includes the following steps.

Step 501 includes that first equipment detects a body movement of a user for transferring out digital media content playback, and sends the second equipment a first message for notifying the second equipment to get ready to transfer the digital media content playback to second equipment.

Step 501 is specifically implemented as follows: the first equipment, after detecting the body movement of the user for transferring out the digital media content playback, obtains first positional relationship information between the first equipment and the user, encapsulates the first positional relationship information into the first message, and sends the first message to the second equipment for the second equipment to determine the first equipment for receiving its second message according to the first positional relationship information in the first message.

Step 502 includes that the first equipment receives the second message responsive to the first message from the second equipment, and transfers the digital media content playback to the second equipment to play according to the second message.

Step 502 is specifically implemented as follows: the first equipment receives one or more second messages from one or more second equipment, extracts one or more pieces of second positional relationship information from the one or more second messages, and determines the second equipment for transferring its digital media content playback according to the one or more pieces of second positional relationship information.

Preferably, the first/second positional relationship information is angle information formed by an arm, a hand and the first/second equipment, or the first/second positional relationship information is distance information between the hand or arm and the first/second equipment.

Preferably, the first equipment detects the body movement by virtue of its photographic part, and the body movement is a gesture including grabbing/pinching and taking-back.

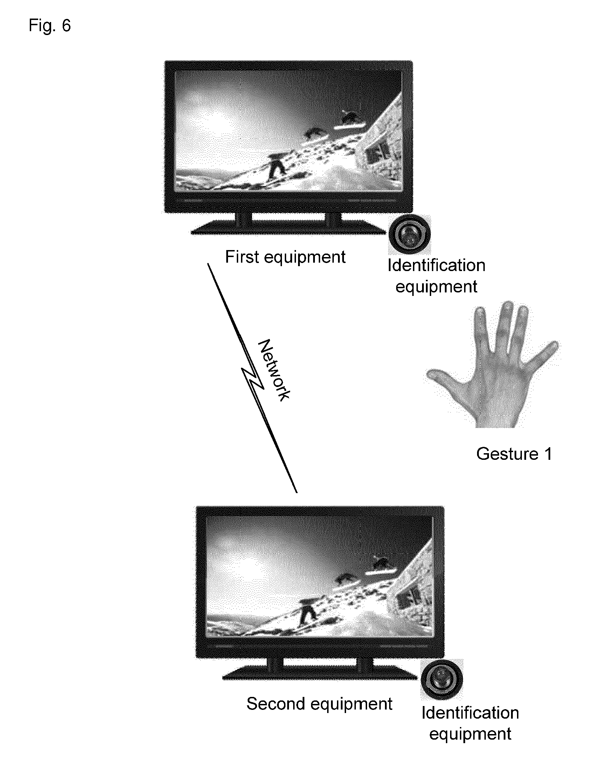

Fig. 6 is a schematic diagram of an application scenario of transferring digital media content playback according to a second embodiment of the present disclosure. Each equipment and their relationships are shown in Fig. 6, and a system includes two equipment which are both TVs: TV1 and TV2.

There is a photographic part (such as a camera) on TV1 which serves as the first equipment, and a user may make the grabbing movement and the like with a hand in front of the camera. In the embodiment, the movements which can be identified by TV1 are as follows respectively:
1) grabbing: the user makes a grabbing movement or a pinching movement with a hand at the camera; and
2) taking-back: the user makes a taking-back movement with a palm and an arm at the camera: the arm is straightened at the camera, and then the forearm is bent back towards a midline direction of a body of the user.

TV1 sends TV2 the first message for notifying TV2 to get ready for reception after receiving or identifying the body movement representing that the digital media content playback is to be transferred out of the first equipment, and notifies TV2 of its own digital media content playing capability to facilitate the transfer of the digital media content playback.

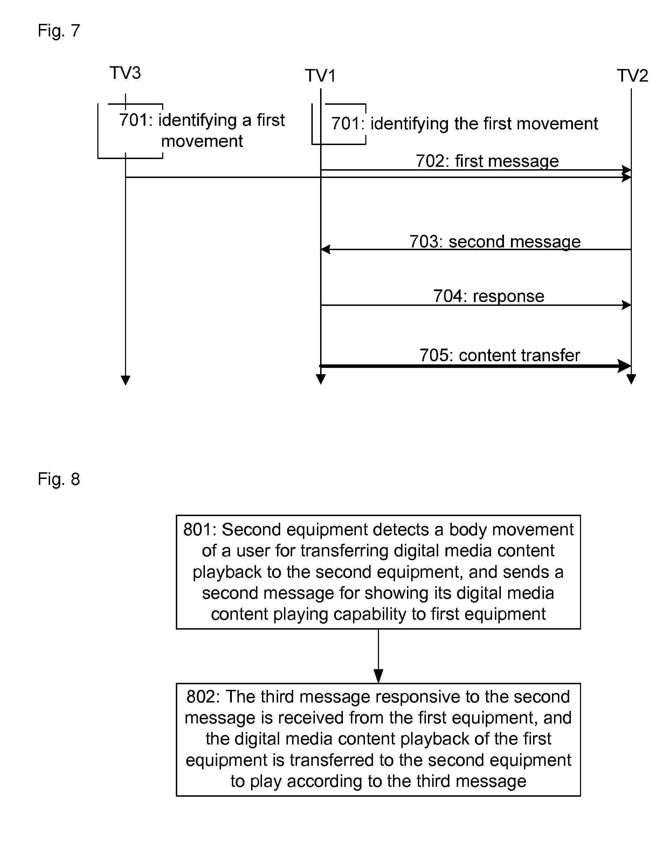

Fig. 7 is schematic diagram illustrating a flowchart of network messages in a control method according to a second embodiment of the present disclosure. As shown in Fig. 7, there are two first equipment TV1 and TV3 and one equipment TV2 in the embodiment, and the flow includes the following steps:
step 701: the user demonstrates a first movement on TV1, and both TV1 and TV3 identify the first movement, and determine a transfer intention of the user, namely identifying that current video playback is to be transferred to another equipment to play;
step 702: TV1 and TV3 broadcast first messages READY PLEASE for notifying the other equipment to get ready for identification and reception respectively after identifying the body movement of the user for transferring out the digital media content playback, and notify other equipment of their own digital media content playing capabilities;
step 703: TV2 may send a second message PAIRED OK or PAIR FAILURED to only one TV1. That is, TV2 determines and selects the most accurate first equipment according to gesture position information given by the first equipment in the received first messages after receiving the first messages sent by multiple first equipment like TV1 and TV3, and responds to the first equipment with the second message PAIRED OK. In the embodiment, TV2 confirms that TV2 has been ready to receive the digital media content playback to TV1, namely sending the second message PAIRED OK to TV1;
Step 704: TV1 gives a response to the message PAIRED OK with PAIRED CONFIRM, that is, TV1 transfers the digital media content playback to TV2 to play; and
Step 705: the current digital media content playback of TV1 is transferred to TV2 to play.

After the confirmation between TV1 and TV2 through the network messages, the transfer of digital media content playback between TV1 and TV2 is started until being completed or interrupted.

The present disclosure further provides a third embodiment: under the condition that there is first equipment (TV1) that is playing a digital media content, the user makes a gesture to multiple second equipment (TV2 and the like), and the second equipment such as TV2 triggers a network message (the second message) PAIRED OK after identifying the gesture, the message being sent in a multicast/broadcast manner, a content contained in the message being as mentioned in the first embodiment; and the first equipment TV playing the digital media content, after receiving the message PAIRED OK, determines and selects the target second equipment (for example, TV2 is selected) by virtue of the determination manner in the abovementioned manners, that is, according to the positional relationship information, and TV1 sends a response message PAIRED CONFIRM to TV2, the message containing negotiation information for received PAIRED OK. After a one-to-one connection is established by TV1 and TV2, subsequent playback transfer control is similar to that in the abovementioned embodiments. Further description is given below with reference to Fig. 8 to Fig. 10.

Fig. 8 is a principle diagram of a method for transferring digital media content playback according to a third embodiment of the present disclosure, and as shown in Fig. 8, the method includes the following steps:
step 801: second equipment detects a body movement of a user for transferring the digital media content playback to the second equipment, and sends a second message for showing its digital media content playing capability to first equipment;
step 801 is specifically implemented as follows: the second equipment, after detecting the body movement of the user for transferring the digital media content playback to the second equipment, obtains second positional relationship information between the second equipment and the user, encapsulates the second positional relationship information into the second message, and sends the second message to the first equipment, so that the first equipment determines the second equipment for transferring its digital media content playback according to the second positional relationship information in the second message after receiving the second messages from one or more second equipment, and sends a third message to the determined second equipment, wherein the second equipment detects the body movement by virtue of its photographic part, and the body movement is a gesture including throwing/pointing/finger spreading; and
step 802: the second equipment receives a third message responsive to the second message from the first equipment, and transfers the digital media content playback of the first equipment to the second equipment to play according to the third message;
step 802 is specifically implemented as follows: the second equipment, after receiving the third message, transfers the digital media content playback to the second equipment to play when the third message is a message of transferring the digital media content playback.

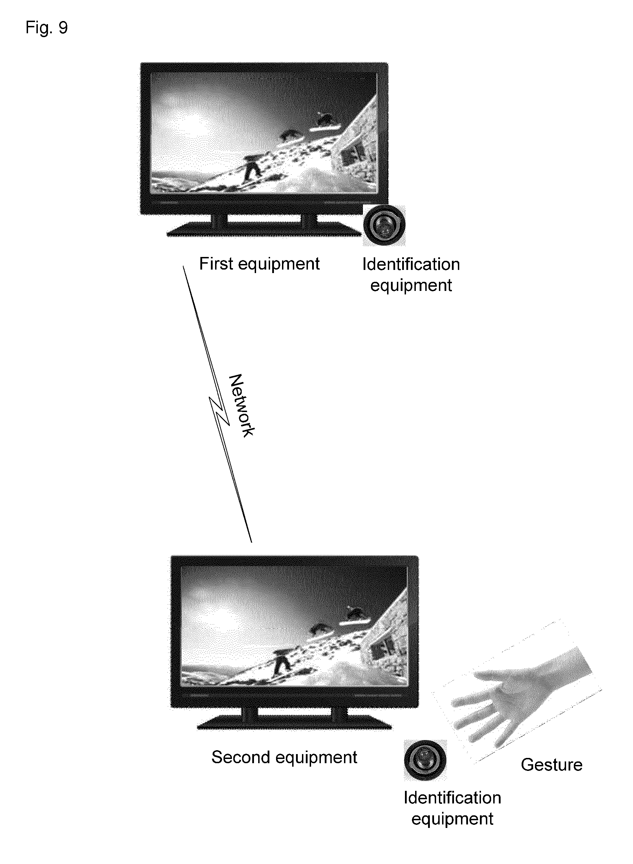

Fig. 9 is a schematic diagram of an application scenario of transferring digital media content playback according to a third embodiment of the present disclosure. Each equipment and their relationships are shown in Fig. 9, and there are two equipment which are both TVs: TV1 and TV2.

TV2, as second equipment, has a photographic part (such as a camera). The user may make a throwing, releasing or pointing movement and the like in front of the camera of TV2. In the embodiment, the movements which can be identified by TV2 are as follows respectively:
1) throwing: the user makes a throwing movement with a hand at the camera of TV2;
2) releasing: the user keeps a grabbing or pinching movement in the first group, and then makes a releasing movement with a hand at the camera of TV2;
3) pointing: the user makes a pointing movement at the camera of TV2; and
4) spreading; if TV2 has a touch screen, five fingers are gathered, and then the fingers are spread on the touch screen.

At first, TV2 sends a second message to TV1 to notify TV1 that TV2 has been ready to receive the digital media content playback after receiving or identifying the body movement for transferring the digital media content playback to TV2 to play, the second message including the second positional relationship information (such as the gesture position information) between TV2 and the user. Then, TV1 confirms to transfer the digital media content playback to TV2 to finish transferring the playback.

Here, the gesture position information may be an angle parameter between the gesture and the equipment, and may also be a distance parameter between the gesture and the equipment. Therefore, when there exist multiple first equipment or multiple second equipment, local equipment can determine the optimal opposite equipment according to the gesture position information of the opposite equipment and respond to the message.

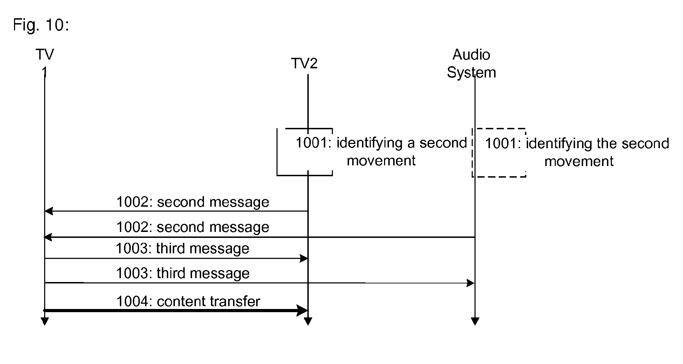

Fig. 10 is a flowchart of network messages in a control method according to a third embodiment of the present disclosure. As shown in Fig. 10, the first equipment is TV1, and there are two second equipment: TV2 and Audio System respectively. In the embodiment, the digital media content is played on TV1, the user controls the display media content playback to be transferred from TV1 to TV2, and for the user, scenarios and experiences are as follows: when the throwing movement is made to the camera of TV2, the digital media content originally played on TV1 is played on TV2, and the user can directly watch the video content played on TV2. The flow includes the following steps.

Step 1001 includes that the second equipment TV2 and Audio System identify a second movement, and identify that the digital media content playback is to be transferred to the second equipment to play.

Step 1002 includes that after the second equipment TV2 and Audio System identify the body movement of the user for transferring the digital media content playback to the second equipment, TV2 and Audio System send to the first equipment second messages PAIRED OK to confirm that TV2 and Audio System have been ready to receive the digital media content playback.

In Step 1002, there are two kinds of second messages: the first is PAIRED OK, representing that the equipment can receive the digital media content playback; and the other is PAIR FAILED, representing that the equipment cannot receive the transferred digital media content playback although identifying the movement. In the embodiment, TV2 and Audio System send PAIRED OK to TV1. In the embodiment, TV2 and Audio System send PAIRED OK to TV1, the second message including the gesture position information identified by the second equipment.

Step 1003 includes that TV1 gives a response PAIRED CONFIRM or PAIR REFUSED to the message PAIRED OK.

TV1 sends the third message PAIRED CONFIRM or PAIR REFUSED to TV2 or Audio System. In the embodiment, TV1 sends PAIRED CONFIRM to TV2, and sends PAIR REFUSED to Audio System, namely TV1 selects to transfer the digital media content to TV2 to play.

TV1 may determine the optimal second equipment according to the gesture position information identified by the second equipment when receiving PAIRED OK from multiple second equipment such as TV2 and Audio System in Fig. 10. Of course, TV1 may also provide an operating interface for the user to select the target equipment, for example, options are listed on the screen, the user selects the equipment, and then the subsequent flow is continued.

Step 1004 includes that the current digital media content playback on TV1 is transferred to TV2 to play.

After the confirmation between TV1 and TV2 is made through the network messages, the transfer of digital media content playback between TV1 and TV2 is started until being completed or interrupted.

As a fourth embodiment, gestures may be simultaneously made for the first equipment and the second equipment, the two kinds of equipment (which may be not only one equipment) simultaneously identify the gestures, and trigger playback transfer negotiation. Such a network message flow is similar to that in the first embodiment, and will not be repeated here.

From the aspect of data transmission, digital media content playback transfer is, for example, as follows:
(1) TV1 sends file/data to TV2 at a time, or
(2) TV1 sends file/data to TV2 in form of stream, or
(3) TV1 notifies TV2 of an address of a content source on another equipment, and TV2 downloads file/data from the address of the content source, or
(4) TV1 notifies TV2 of an address of a content source on another equipment, and TV2 receives a media stream from the content source, and the like.

In the embodiment, TV1 serves as the first equipment, the first equipment is not limited to be equipment like TV1 in the present disclosure, a mobile phone, other player with a touch screen (remote controller), even a computer and the like may be adopted as the first equipment, and the triggering function in the abovementioned flows may also be realized by virtue of a keyboard and a mouse on the computer.

In the embodiment, TV2 and Audio System serve as the second equipment, the second equipment is not limited to be equipment like a TV in the present disclosure; a mobile phone, a set-top box, projector, a computer and the like with cameras and various capabilities described in the embodiments can be adopted as the second equipment.

In the embodiment, contents can be transmitted and shared between different equipment in a family, for example, a mobile phone transmits an image to a TV, and simultaneously transmits sound to audio equipment, and in a place like an exhibition hall with multiple TVs, the playback of multiple contents and the like are transferred to different TVs at the same physical position.

The above flows are not limited to be implemented only by the embodiments, and are also not intended to limit the methods executed by specific flows, the present disclosure may further be implemented by virtue of similar manners, for example, names representing the modules and types of various messages, and differences only exist between naming forms, specific message contents and the like.

The embodiments are network-related, and can be applied to an IP network supported by a communication network such as an IEEE 802.3-based network, an IEEE 802.11 b/g/n-based network, a POWERLINE network, a CABLE network, a Public Switched Telephone Network (PSTN), a 3rd Generation Partnership Project (3GPP) network and a 3GPP2 network, an operation system of each apparatus can be applied to a UNIX operation system, a WINDOWS operation system, an ANDROID operation system and an Iphone Operation System (IOS), and a consumer interface can be applied to a JAVA language interface and the like.

For clarity, not all conventional characteristics of the equipment are shown and described here. Of course, it should be understood that a specific implementation manner must be determined to achieve specific purposes of a developer during any practical equipment development, for example, consistency with constraints related to applications and services, and these specific purposes change along with different implementation manners, and also change along with different developers. Moreover, it should be understood that such development work is complicated and time-consuming, however, for ordinary technicians inspired by the contents disclosed by the present disclosure, the technical work is conventional.

According to the subject described here, various kinds of operation systems, calculation platforms, computer programs, and/or universal machines can be utilized to manufacture, operate and/or execute various parts, systems, apparatuses, processing steps and/or data structures. In addition, those skilled in the field may understand that apparatuses which are not so universal may also be utilized without departing from the scope and spiritual substance of the inventive concept disclosed here. The methods are executed by computers, apparatuses or machines, the methods can be stored as machine-readable instructions, and they can be stored on a determined medium, such as a computer storage apparatus, including, but not limited to, a Read Only Memory (ROM) (an ROM, a FLASH memory, a transfer apparatus and the like), a magnetic storage medium (such as a magnetic tape and a magnetic tape driver), an optical storage medium (such as a Compact Disc-Read Only Memory (CD-ROM), a Digital Video Disk-Read Only Memory (DVD-ROM), a paper card and a paper tape) and other familiar program memories. In addition, it should be realized that the methods can be selected by a software tool to be executed by a human operator without human or creative judgment.

Although the present disclosure is described above in detail, the present disclosure is not limited to the above, and those skilled in the art may make various modifications according to the principle of the present disclosure. Therefore, the modifications made according to the principle of the present disclosure shall fall within the scope of protection of the present disclosure.

## Claims

1. A method for transferring digital media content playback, comprising:
detecting, by first equipment, a body movement of a user for transferring out digital media content playback, and sending the second equipment a first message for notifying second equipment to get ready to transfer the digital media content playback to the second equipment; and
receiving, by the first equipment, a second message responsive to the first message from the second equipment, and transferring the digital media content playback to the second equipment to play according to the second message.

2. The method according to claim 1, wherein the first equipment, after detecting the body movement of the user for transferring out the digital media content playback, obtains first positional relationship information between the first equipment and the user, encapsulates the first positional relationship information into the first message, and sends the first message to the second equipment for the second equipment to determine one of the first equipment for receiving the second message according to the first positional relationship information in the first message.

3. The method according to claim 2, wherein the first equipment receives one or more second messages from one or more second equipment, extracts one or more pieces of second positional relationship information from the one or more second messages, and determines one of the one or more second equipment to which the digital media content playback is to be transferred according to the one or more pieces of second positional relationship information.

4. The method according to claim 3, wherein the first/second positional relationship information is angle information formed by an arm, a hand and the first/second equipment, or the first/second positional relationship information is distance information between a hand or an arm and the first/second equipment.

5. The method according to claim 1 or 2, wherein the first equipment detects the body movement by virtue of a photographic part of the first equipment, and the body movement is a gesture comprising grabbing/pinching and taking-back.

6. A method for transferring digital media content playback, comprising:
detecting, by second equipment, a body movement of a user for transferring digital media content playback to the second equipment, and sending a second message for showing a digital media content playing capability of the second equipment to first equipment; and
receiving, by the second equipment, a third message responsive to the second message from the first equipment, and transferring the digital media content playback of the first equipment to the second equipment to play according to the third message.

7. The method according to claim 6, before the second equipment detects the body movement, the method further comprising:
detecting, by the first equipment, a body movement of the user for transferring out the digital media content playback to obtain first positional relationship information between the first equipment and the user, encapsulating the first positional relationship information into a first message for notifying the second equipment to get ready to transfer the digital media content playback to the second equipment, and sending the first message to the second equipment; and
after one or more first messages are received from one or more first equipment, determining, by the second equipment, one of the one or more first equipment for receiving the second message according to one or more pieces of first positional relationship information in the one or more first messages.

8. The method according to claim 6 or 7, wherein the second equipment, after detecting the body movement of the user for transferring the digital media content playback to the second equipment, obtains second positional relationship information between the second equipment and the user, encapsulates the second positional relationship information into the second message, and sends the second message to the first equipment.

9. The method according to claim 8, wherein the first equipment, after receiving the second message from one or more second equipment, determines one of the one or more second equipment for transferring the digital media content playback according to the second positional relationship information in the second message, and sends the third message to the determined second equipment.

10. The method according to claim 9, wherein the second equipment, after receiving the third message, transfers the digital media content playback to the second equipment to play when the third message is a message indicative of transferring the digital media content playback.

11. The method according to claim 10, wherein the first/second positional relationship information is angle information formed between an arm, a hand and the first/second equipment, or the first/second positional relationship information is distance information between a hand or an arm and the first/second equipment.

12. The method according to claim 11, wherein the first equipment detects the body movement by virtue of a photographic part of the first equipment, and the body movement is a gesture comprising grabbing/pinching and taking-back; and the second equipment detects the body movement by virtue of a photographic part of the second equipment, and the body movement is a gesture comprising throwing/pointing/finger spreading.

13. A transferring-out apparatus for transferring digital media content playback, comprising:
a first detection module, configured to detect a body movement of a user for transferring out digital media content playback;
a first transceiver module, configured to send the second equipment a first message for notifying second equipment to get ready to transfer the digital media content playback to the second equipment, and receive from the second equipment a second message responsive to the first message; and
a transferring-out module, configured to transfer the digital media content playback to the second equipment to play according to the second message.

14. The apparatus according to claim 13, wherein the transferring-out module comprises:
a transferring-out extraction sub-module, configured to receive one or more second messages from one or more second equipment, and extract one or more pieces of second positional relationship information from the one or more second messages; and
a transferring-out selection sub-module, configured to determine one of the one or more second equipment to which the digital media content playback is to be transferred according to the one or more pieces of second positional relationship information.

15. A transferring-in apparatus for transferring digital media content playback, comprising:
a second detection module, configured to detect a body movement of a user for transferring digital media content playback to the second equipment;
a second transceiver module, configured to send a second message for showing a digital media content playing capability of the second equipment to first equipment, and receive a third message responsive to the second message from the first equipment; and
a transferring-in module, configured to transfer the digital media content playback of the first equipment to the second equipment to play according to the third message.

16. The apparatus according to claim 15, wherein the second transceiver module is further configured to receive from the first equipment one or more first messages comprising one or more pieces of first positional relationship information between the first equipment and the user, and determine one of the first equipment for receiving the second message according to the one or more pieces of first positional relationship information in the one or more first messages.

17. A system for transferring digital media content playback, comprising the transferring-out apparatus according to any one of claims 13 to 14 and the transferring-in apparatus according to any one of claims 15 to 16.
